# EUROPEAN PATENT APPLICATION

(11) **EP 1 011 266 A2**
(43) Date of publication of application: **21.06.2000**
(21) Application number: 99123651.4
(22) Date of filing: 29.11.1999
(51) Int. Cl.: H04N 5/21

(54) **Method for the recovery of a video signal**

(30) Priority: 10.12.1998 DE 19857030
(71) Applicant: DEUTSCHE THOMSON-BRANDT GMBH, 78048 Villingen-Schwenningen (DE)
(72) Inventor: Lin, Jinan, 85521 Ottobrunn (DE); Erbar, Maximilian, 78052 Villingen-Schwenningen (DE)
(74) Representative: Hartnack, Wolfgang, Dipl.-Ing.

(57) **Abstract**

The invention relates to a method for the recovery of a video signal.

According to the invention, an adaptive equalizer 2 is used, the characteristics of which are adjusted to the conditions of a transmission channel by means of the digital data signals that are concomitantly transmitted in addition to the analogue signal components in a video signal. This adjustment is then used for analogue signal components of the video signals. The teletext signal can advantageously be used for the adjustment.

## Description

The invention relates to a method for the recovery of a video signal.

### Prior art

Video signals which are transmitted via a channel are, as a rule, influenced by the channel characteristics. This applies, in particular, to channels which are susceptible to interference, such as the terrestrial transmission of TV signals. Signal interference may occur due to ambient influences on the transmission path.

There is thus an interest in compensating for this interference in the receiver and in obtaining an optimal reproduction quality.

In the case where the channel characteristics are known in the receiver, interference can be eliminated by means of suitable compensation measures, such as e.g. an equalizer. However, knowledge of the channel characteristics is not provided e.g. in the case of terrestrial transmission. In order to ensure interference-free reception even in the case of such transmission channels which are subject to interference, an adaptive equalizer can be used. It is then necessary, however, to transmit a reference signal with the useful signal, from which reference signal the corresponding compensation parameters are then derived by the adaptive equalizer. For capacity reasons, however, such reference signals are not prescribed by the transmitter.

### Invention

The invention is based on the object of specifying a method for the recovery of a video signal which, without an additional reference signal, to the greatest possible extent eliminates channel interference which influences the quality of the video signal.

The object is achieved by means of the features specified in Claim 1.

Advantageous developments are reproduced in the sub-claims.

According to the invention, an adaptive equalizer is used which is trained by the digital data signals, such as e.g. teletext data, that are concomitantly transmitted in a video signal.

An adaptive equalizer adapts itself independently in order to compensate for unknown or time-variable channel characteristics. An input signal which is interfered with by the channel is changed by the adaptive equalizer until a desired output signal is present. Since adaptive equalizers cannot judge when a desired analogue output signal is present given an analogue input signal, the digital data signal that is concomitantly transmitted with the analogue input signal is advantageously used for the adjustment of the adaptive equalizer.

It is preferable for the adaptive equalizer to be adapted to the optimal reception condition during the transmission duration of the digital data signals and for this adjustment then to be maintained during the transmission duration of the analogue signals.

### Drawings

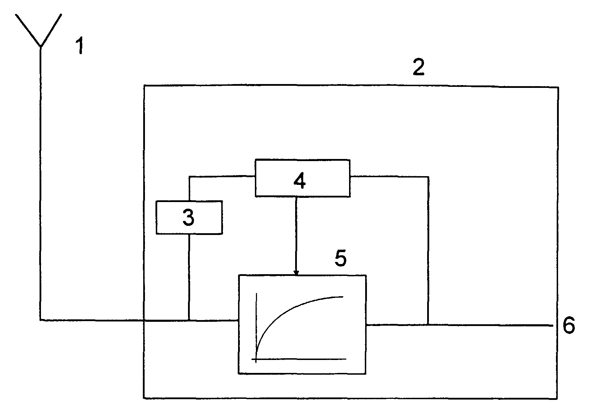

Furthermore, an exemplary embodiment for a circuitry realization for the method according to the invention is described with reference to the drawing.

A signal is fed to an adaptive equalizer 2 via a reception device 1. The adaptive equalizer 2 comprises, in particular, an adjustable filter unit 5, via which the video signal is fed to an output 6.

In addition, the video signal is fed via a window stage 3 to an evaluation stage 4 for digital data signals. A control output of the evaluation stage 4 is connected to the adjustable filter unit 5. The output of the evaluation stage likewise leads to the output 6 of the adaptive equalizer 2. Further processing stages (not shown) for the video signal are connected to the output 6.

In order to eliminate the influence of channel-dictated interference on the video signal, the digital data signals are used to modify the filter characteristics of the adjustable filter unit 5 in such a way as to minimize the interference for the output signal.

By means of a window stage 3 and an evaluation stage 4, the operation for altering the filter characteristics of the adjustable filter unit 5 is limited to the period of time in which digital data signals are present. As soon as the digital data signals are no longer present, the filter characteristics of the adjustable filter unit 5 are frozen for example via a control line by means of a corresponding signal.

The method according to the invention is suitable for any signal transmission methods and for signals which contain not only analogue information but also digital data signals which have a sufficiently high statistical probability.

## Claims

1. Method for the recovery of a video signal with analogue and digital signal components, **characterized** in that the signals are fed to an adaptive equalizer (2), in that the digital signal components of the video signal are used as adaptation criteria for the adaptive equalizer (2) and in that the adjustment of the adaptive equalizer (2) that is obtained in this way is used for correcting the analogue signal.

2. Method according to Claim 1, **characterized** in that the digital teletext data are used as the digital signal components of the video signal. 3. Method according to Claim 1, **characterized** in that the adaptation criteria for the adaptive equalizer (2) can be altered only while the digital signal components are present.
